# EUROPEAN PATENT APPLICATION

(11) **EP 4 706 986 A1**
(43) Date of publication of application: **11.03.2026**
(21) Application number: 24823533.5
(22) Date of filing: 29.03.2024
(51) Int. Cl.: B60C 7/10, B60C 7/24

(54) **AIRLESS TIRE**

(30) Priority: 13.06.2023 KR 20230075586
(71) Applicant: Tannus Co., Ltd., Gimhae-si, Gyeongsangnam-do 50855 (KR)
(72) Inventor: CHOI, Byong Hoon, Busan 46773 (KR)
(74) Representative: BCKIP Part mbB
(86) International application number: PCT/KR2024/004060
(87) International publication number: WO 2024/258012

(57) **Abstract**

An airless tire coupled to a rim is disclosed. The airless tire includes: a ground-contact portion that comes into contact with the ground at least partially when the tire rotates, has a predetermined width, and extends along the circumference of the tire; a coupling portion coupled to the rim; side portions extending from both sides of the ground-contact portion along a surface of the tire to the coupling portion; and a plurality of side grooves radially arranged with respect to a rotational center of the tire and recessed into the side portions. The airless tire has a light weight to reduce rolling resistance, increases surface area to improve heat dissipation, and improves airflow along the side portions during driving to reduce air resistance.

## Description

### Field

The present disclosure relates to an airless tire.

The present disclosure was supported by the project titled "Airless Tire for Electric Mobility under 45W Rolling Resistance to Maximize Energy Efficiency by Improving Rolling Stability and Heat Resistance," under the Ministry of Trade, Industry and Energy's Leisure Equipment Industry Development Support Program (Project No. 2022-1-025 / Announcement No. 2022-234 / Supervising Agency: Korea SMEs and Startups Agency / Research Period: June 23, 2022 - June 22, 2023).

### Description of the Related Art

In general, an airless tire for bicycles is a type of tire designed to solve the problem of punctures. Instead of containing an air-filled tube inside the tire, the interior of the tire is filled with a material such as rubber or provided with a structure including spokes that disperse impact from the ground, and the tire is coupled to the rim of the bicycle wheel. Accordingly, even when the tire is pierced or pressed by an external object, air leakage is prevented.

Although such an airless tire can prevent punctures in bicycle wheels, it tends to increase the overall weight of the tire, thereby reducing its overall performance and increasing rolling resistance. Rolling resistance refers to the resistance that acts when a circular object such as a tire rolls over a surface, which mainly occurs due to deformation of the tire or friction with the ground. Typically, the rolling resistance of a tire is smaller than the kinetic friction force, but as the rolling resistance increases, more energy is required to overcome it.

Therefore, there is a need for an airless tire that reduces rolling resistance by decreasing tire weight, minimizes air resistance acting on the tire surface during rotation, and improves heat dissipation performance by increasing the surface area of the tire.

### Description

### Technical Problem

The present disclosure is directed to solving the problems of the prior art described above and provides an airless tire in which: a ground-contact portion comes into contact with the ground at least partially when the tire rotates, has a predetermined width, and extends along the circumference of the tire; a coupling portion is coupled to a rim; side portions extend from both sides of the ground-contact portion along a surface of the tire to the coupling portion; and a plurality of side grooves are radially arranged with respect to a rotational center of the tire and recessed into the side portions. The airless tire thus provided has a reduced weight for lower rolling resistance and an increased surface area advantageous for heat dissipation.

The present disclosure also provides an airless tire in which each of the side grooves extends along the side portion from one end formed on a circumferential side of a cross-sectional center of the tire to the other end formed on a rotational-center side of the cross-sectional center, thereby improving the airflow along the side portions of the tire during driving and reducing air resistance.

The present disclosure further provides an airless tire in which the length and depth of the side grooves formed on the tire are varied so that airflow along the side portions of the tire is smooth and improved.

The present disclosure further provides an airless tire in which the inner wall of each side groove is formed in a curved shape on the side portion of the tire, allowing air at the front of the tire to naturally flow along the inner wall of the side groove toward the rear side of the tire.

The present disclosure further provides an airless tire further including a peripheral groove recessed along the circumference of the tire between the ground-contact portion and the side portion, such that air at the front side of the tire flows toward the rear side along an upper and lower direction of the tire.

However, the technical problems to be achieved by the embodiments of the present disclosure are not limited to the technical problems described above, and there may be other technical problems.

### Means for Solving the Problem

As a technical means for achieving the above-described objectives, an airless tire according to one embodiment of the present disclosure may include: a ground-contact portion that comes into contact with the ground at least partially when the tire rotates, has a predetermined width, and extends along the circumference of the tire; a coupling portion configured to be coupled to a rim; side portions extending from both sides of the ground-contact portion along the surface of the tire to the coupling portion; and a plurality of side grooves radially arranged with respect to a rotational center of the tire and recessed into the side portions.

In the airless tire according to one embodiment of the present disclosure, each of the side grooves may extend along the side portion from one end formed on a circumferential side of a cross-sectional center of the tire to the other end formed on a rotational-center side of the cross-sectional center.

In the airless tire according to one embodiment of the present disclosure, each of the side grooves may have an insertion depth that gradually increases along the side portion from a circumferential-side end of the side groove toward a cross-sectional center side.

In the airless tire according to one embodiment of the present disclosure, each of the side grooves may have an insertion depth that gradually decreases along the side portion from a point where the side groove intersects a straight line extending parallel to a rotational axis of the tire at a cross-sectional center to an opposite end of the side groove formed on a rotational-center side.

In the airless tire according to one embodiment of the present disclosure, each of the side grooves may have an insertion depth that gradually increases along the side portion from a point where the side groove intersects a straight line extending parallel to a rotational axis of the tire at a cross-sectional center to an opposite end of the side groove formed on a rotational-center side.

In the airless tire according to one embodiment of the present disclosure, each of the side grooves may include a first segment forming one inner wall of the side groove and a second segment forming the other inner wall of the side groove, and at least a portion of the first segment and the second segment may extend with different curvatures.

In the airless tire according to one embodiment of the present disclosure, as each of the side grooves extends along the side portion from a circumferential-side end to a rotation-center-side end, a distance between the first segment and the second segment may gradually increase and then decrease.

In the airless tire according to one embodiment of the present disclosure, a maximum insertion depth of each of the side grooves toward a cross-sectional center side may be 5 mm or more.

In the airless tire according to one embodiment of the present disclosure, a length of extension of each of the side grooves may be at least one-fourth of a length from a circumferential-side end of the ground-contact portion to an end of the side portion on a coupling-portion side.

In the airless tire according to one embodiment of the present disclosure, a plurality of side grooves respectively formed on the side portions at both sides of the ground-contact portion may be recessed symmetrically with respect to the ground-contact portion.

In the airless tire according to one embodiment of the present disclosure, a plurality of side grooves respectively formed on the side portions at both sides of the ground-contact portion may be recessed alternately with respect to the ground-contact portion.

In the airless tire according to one embodiment of the present disclosure, the airless tire may further include a peripheral groove recessed along a circumference of the tire between the ground-contact portion and the side portion.

The aforementioned means for solving the problem are merely exemplary and should not be construed as intending to limit the present disclosure. In addition to the exemplary embodiments described above, further embodiments may exist in the drawings and the detailed description of the invention.

### Effect of the Invention

According to the aforementioned means for solving the problems of the present disclosure, the present disclosure is intended to overcome the drawbacks of the prior art. The present disclosure provides an airless tire that includes a ground-contact portion coming into contact with the ground at least partially when the tire rotates, having a predetermined width and extending along the circumference of the tire; a coupling portion configured to be coupled to a rim; side portions extending from both sides of the ground-contact portion along a surface of the tire to the coupling portion; and a plurality of side grooves radially arranged with respect to a rotational center of the tire and recessed into the side portions. The airless tire thus achieves reduced weight for lower rolling resistance and increased surface area advantageous for heat dissipation.

According to the aforementioned means for solving the problems of the present disclosure, since each of the side grooves extends along the side portion from one end formed on a circumferential side of a cross-sectional center of the tire to the other end formed on a rotational-center side of the cross-sectional center, airflow along the side portion of the tire during driving is improved, thereby reducing air resistance.

According to the aforementioned means for solving the problems of the present disclosure, by varying the length and depth of the side grooves formed on the tire, airflow along the side portion of the tire becomes smoother, thereby enhancing aerodynamic efficiency.

According to the aforementioned means for solving the problems of the present disclosure, since the inner wall of each side groove is formed in a curved shape on the side portion of the tire, air at the front side of the tire naturally flows along the inner wall of the side groove toward the rear side, thereby improving air circulation and reducing drag.

According to the aforementioned means for solving the problems of the present disclosure, the airless tire further includes a peripheral groove recessed along the circumference of the tire between the ground-contact portion and the side portion, so that air at the front side of the tire flows toward the rear side along an upper and lower direction of the tire, thereby improving overall airflow and reducing air resistance.

### BRIEF DESCRIPTION OF THE DRAWINGS

FIG. 1 is a schematic perspective view of an airless tire according to one embodiment of the present disclosure.
FIG. 2 is a schematic cross-sectional view taken along line A-A' of the airless tire according to one embodiment of the present disclosure.
FIG. 3 is an enlarged schematic cross-sectional view of the airless tire according to one embodiment of the present disclosure.
FIG. 4 is a schematic cross-sectional view taken along line A-A' of the airless tire according to another embodiment of the present disclosure.
FIG. 5 is an enlarged view illustrating a portion of the surface of the airless tire according to one embodiment of the present disclosure.
FIG. 6 is a schematic view illustrating side grooves formed on a side portion of the airless tire according to one embodiment of the present disclosure.
FIG. 7 is a front view of the airless tire according to one embodiment of the present disclosure.
FIG. 8 is a front view of the airless tire according to another embodiment of the present disclosure.

### DETAILED DESCRIPTION

Hereinafter, examples of the present disclosure will be described in detail so as to be easily implemented by those skilled in the art, with reference to the accompanying drawings. However, the present disclosure may be embodied in many different forms and are not limited to the examples to be described herein. In addition, parts not related with the description have been omitted in order to clearly describe the present disclosure in the drawings and throughout the present specification, like reference numerals designate like elements.

Further, throughout this specification, when a certain part is "connected" with the other part, it is meant that the certain part may be "directly connected" with the other part and "electrically connected" with the other part with another element interposed therebetween.

Throughout the present specification, it will be understood that when a certain member is located "on", "above", "at the top of", "under", "below", and "at the bottom of" the other member, a certain member is in contact with the other member and another member may also be present between the two members.

Throughout the specification, a case where a part "comprises" an element will be understood to imply the inclusion of stated elements but not the exclusion of any other elements unless explicitly described to the contrary.

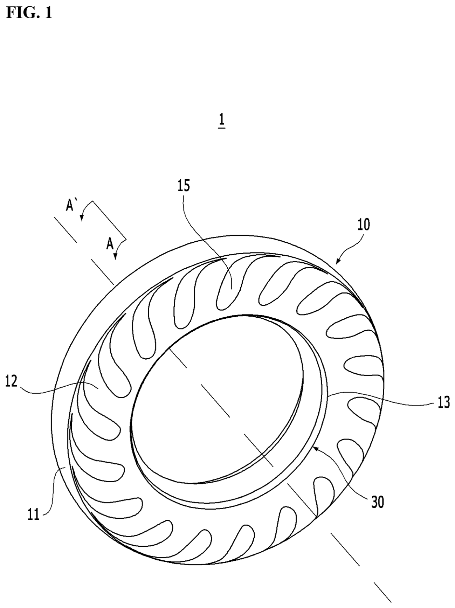

In the description of the embodiments of the present disclosure, terms relating to directions or positions (such as "upper side," etc.) are defined based on the arrangement of components as illustrated in the drawings. For example, in FIG. 1, the overall 12 o'clock direction may correspond to the upper side.

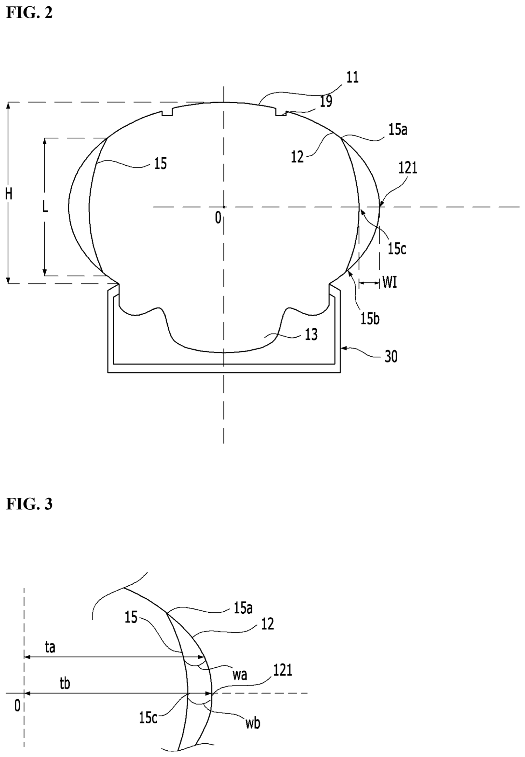

In addition, in the description of the embodiments of the present disclosure, the "circumferential side" (the 12 o'clock direction in FIG. 2) may be understood as referring to a direction toward the outer circumferential surface of the tire, while the "rotational-center side" (the 6 o'clock direction in FIG. 2) may be understood as referring to a direction toward a rotational center (X) of the tire.

The present disclosure relates to an airless tire that has a light weight to reduce rolling resistance, increases surface area to improve heat dissipation, and reduces air resistance by improving airflow along the side portions of the tire during driving.

An airless tire (10) according to one embodiment of the present disclosure will now be described. The airless tire (hereinafter referred to as "the tire") may have an internal structure filled with a material such as rubber or synthetic resin, or it may include structures such as a shear band and spokes. In the embodiment described herein, the tire may be a solid tire filled with rubber, synthetic resin, or an equivalent material. The tire is coupled to a rim. The term "coupled" between the tire and the rim may refer to a state in which the tire is seated on a portion of the rim, and at least a part of the rim and a part of the tire are joined or connected such that the tire does not detach from the rim. This may include a configuration in which a portion of the tire is received in a portion of the rim, or a portion of the tire directly contacts a portion of the rim so as to prevent detachment from the rim. It may also include a configuration in which the tire (10) is prevented from detaching from the rim (30) by means of a separate coupling unit (not shown) provided for coupling the tire (10) to the rim (30).

Referring to FIGS. 1 and 2, the rim (30) is provided in a ring shape, and a coupling portion is formed along a circumferential direction with respect to a rotational center (X) of the tire, such that at least a portion of the tire (10) is coupled thereto. The rim (30) may have a partially recessed shape configured to receive or seat a coupling portion (13) of the tire, which will be described later. However, the shape of the rim is not limited thereto, as long as the tire (10) is coupled to the rim (30) and stably fixed.

Referring to FIG. 1, the tire (10) includes a side-groove structure recessed along side portions of the tire and radially arranged on the tire surface. This structure reduces the overall weight of the tire to decrease rolling resistance, allows air generated during tire rotation to flow smoothly from the front side of the tire to the rear side through the side grooves formed on the side portions, and further increases the surface area of the tire to improve heat dissipation characteristics. The tire (10) may include a ground-contact portion (11), side portions (12), a coupling portion (13), and side grooves (15).

The ground-contact portion (11) is a portion that comes into contact with the ground at least partially when the tire rotates, has a predetermined width, and extends along the circumference of the tire. Although not illustrated, treads or protrusions may be formed on the ground-contact portion (11) to improve driving performance, such as increasing traction or preventing slippage. Referring to the cross-sectional view of FIG. 2, the ground-contact portion (11) may be formed on the circumferential side of the tire (the 12 o'clock direction in FIG. 2) and may symmetrically extend with a predetermined width based on a first axis (the vertical axis passing through the 12 o'clock and 6 o'clock directions in FIG. 2) that passes vertically through a cross-sectional center (O) of the tire. Under typical driving conditions, the ground-contact portion (11) between the peripheral grooves (19) described later may come into contact with the ground. However, it should be noted that the scope of the invention is not limited to cases where only the ground-contact portion (11) contacts the ground; under heavy load conditions, the side portions (12) beyond the peripheral grooves (19) may also contact the ground.

The side portions (12) extend from both sides of the ground-contact portion (11) along the surface of the tire to the coupling portion (13). As will be described later, the coupling portion (13) may be received or seated inside the rim (30) for coupling with the rim (30). Therefore, the side portions (12) may substantially refer to the portions extending from the ends of the ground-contact portion (11) toward the rotational center of the tire along the tire surface, excluding the portions covered by the rim (30). That is, one end of each side portion (12) may correspond to an end or a region near the end of the ground-contact portion (11), and the other end of each side portion (12) may correspond to a portion where the tire surface comes into contact with an edge of the rim (30).

Referring to FIG. 2, the side portion (12) may have a first point (121), which is a point where a straight line extending parallel to the rotational axis of the tire at the cross-sectional center (O) intersects the side portion (12). In one embodiment, the cross-sectional center (O) may be a point that bisects a length (H) from a circumferential-side end of the ground-contact portion to an end of the side portion on the coupling-portion side, and also bisects the width of the tire in the left-right direction.

In one embodiment, the first point (121) may be the most protruding portion of the side portion (12) in the left-right direction of the tire. That is, the most protruding first point (121) of the tire and the cross-sectional center (O) may be positioned on a straight line parallel to the rotational axis. However, it is not intended to exclude the possibility that the first point (121) is not the most protruding portion of the side portion (12).

The coupling portion (13) is a portion of the tire configured to be coupled to the rim (30), and at least a part of the coupling portion (13) is received or seated inside the rim (30) for coupling with the rim. The coupling portion (13) is formed on a rotational-center side (the 6 o'clock direction in FIG. 2) of the tire and may have a predetermined shape, such as a curved or recessed surface, to facilitate coupling with the rim (30) or to accommodate a coupling unit (not shown).

FIG. 2 is a cross-sectional view taken along line A-A' of FIG. 1. Referring to FIGS. 1 and 2, in one embodiment of the present disclosure, the side grooves (15) are radially arranged with respect to the rotational center of the tire and are recessed to a predetermined depth from the side portions (12) toward the cross-sectional center (O) of the tire. Each side groove (15) may extend along the side portion from one end (15a) formed on the circumferential side of the cross-sectional center (O) of the tire to the other end (15b) formed on the rotational-center side of the cross-sectional center. Accordingly, the cross-sectional center (O) of the tire is positioned between the circumferential-side end and the rotation-center-side end of each side groove (15).

The length of extension (L) from one end to the other end of each side groove (15) may be at least one-fourth of a length (H) from a circumferential-side end of the ground-contact portion (11) to an end of the side portion (12) on a coupling-portion (13) side. Compared to a configuration in which the side groove is recessed only as a hole in a specific area of the side portion (12), forming the side groove along the rotational direction of the tire can reduce air resistance and decrease the overall weight of the tire. In this case, both the extension length of the side groove and the length from the circumferential-side end of the ground-contact portion to the end of the side portion on the coupling-portion side may correspond to lengths measured along a first axis passing vertically through the cross-sectional center (O). Referring to FIG. 2, as the side groove (15) is recessed along the side portion from the circumferential-side end (15a) to the rotation-center-side end (15b), the overall volume of the tire is reduced, and the thickness of the tire becomes smaller in the portion where the side groove is formed compared to the portion where it is not. When the tire rotates and the bicycle or vehicle moves forward, air at the front or circumferential side of the tire flows along the side groove (15) toward the rear or rotational-center side of the tire. The air flows along the surface of the tire, and when the distance from the circumferential-side end of the ground-contact portion to the end of the side portion on the coupling-portion side is defined as H, the extension length (L) of the side groove should be at least a certain ratio-preferably one-fourth or more-of H for the air to flow effectively along the side groove and achieve a noticeable improvement in airflow.

Continuing with reference to FIG. 2, each side groove (15) may have different insertion depths at different points. As each side groove extends along the side portion (12) from the circumferential-side end (15a) toward the cross-sectional center, the insertion depth of the side groove may gradually increase. In addition, the side groove (15) may have an intersection point (15c), which is a point where the side groove intersects a straight line extending parallel to the rotational axis of the tire at the cross-sectional center (O). As the side groove (15) extends along the side portion from the intersection point (15c) to the rotation-center-side end (15b) of the side groove, the insertion depth of the side groove may gradually decrease. In other words, in the embodiment illustrated in FIG. 2, as the side groove (15) extends along the side portion (12) from the circumferential-side end (15a) to the rotation-center-side end (15b), the insertion depth of the side groove (15) may gradually increase and then decrease. In one embodiment, the insertion depth (w1) between the first point (121) of the side portion and the intersection point (15c) of the side groove may be the maximum depth.

Meanwhile, as shown in FIG. 3, each point on the side portion (12) may have distances (ta, tb) defined from a first axis that vertically passes through the cross-sectional center (O). Similarly, insertion depths (wa, wb) at respective points of the side groove (15) may also be defined in a direction parallel to the first axis. In one embodiment, the side portion (12) recessed by the side groove (15) may be formed to have a convex shape in the left-right direction. That is, the difference (tb - ta) between the distance (tb) from the first axis to a point on the side portion (12) at the cross-sectional center (O) side and the distance (ta) from the first axis to a point on the circumferential side may be greater than the difference (wb - wa) between the distance (wb) from the first axis to a point on the side groove at the cross-sectional center (O) side and the distance (wa) from the first axis to a point on the side groove at the circumferential side (tb - ta > wb - wa). Alternatively, the difference (tb - wb) between the distance (tb) from the first axis to a point on the side portion (12) at the cross-sectional center (O) side and the distance (wb) from the first axis to a point on the side groove at the cross-sectional center (O) side may be greater than the difference (ta - wa) between the distance (ta) from the first axis to a point on the side portion at the circumferential side and the distance (wa) from the first axis to a point on the side groove at the circumferential side. As a result, when air flows from the circumferential side toward the rotational-center side of the tire, airflow can be improved while preventing excessive negative pressure from occurring on the side portion of the tire.

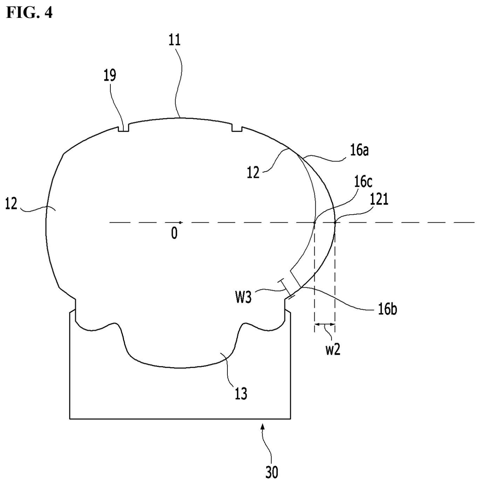

The side groove (16) of another embodiment of the present disclosure, illustrated in FIG. 4, may have different insertion depths at various points. As the side groove extends along the side portion (12) from a circumferential-side end (16a) toward the cross-sectional center, the insertion depth of the side groove may gradually increase. In addition, as the side groove (16) extends along the side portion from an intersection point (16c)-which is a point where the side groove intersects a straight line extending parallel to the rotational axis of the tire at the cross-sectional center-to a rotation-center-side end (16b) of the side groove, the insertion depth of the side groove may also gradually increase. In this case, the insertion depth of the side groove (16) may be directed toward the cross-sectional center (O). In other words, in the embodiment shown in FIG. 3, as the side groove (16) extends along the side portion (12) from the circumferential-side end (16a) to the rotation-center-side end (16b), the insertion depth of the side groove (16) may gradually increase. In this embodiment, the insertion depth (w3) of the side groove at the rotation-center-side end (16b) may be greater than the insertion depth (w2) from the first point (121) of the side portion to the intersection point (16c) of the side groove.

In one embodiment, the maximum insertion depth of each side groove (15) may be 5 mm or more. In a conventional pneumatic tire containing an inner tube, the side portion has a relatively thin thickness, making it difficult to form side grooves having such a maximum insertion depth as in the present disclosure. However, in an airless tire filled with a material such as synthetic resin or formed from a single solid material, side grooves having an insertion depth of 5 mm or more can be formed in the side portions of the tire. As a result, air resistance due to the tire shape can be minimized, and in the case of the tire according to one embodiment of the present disclosure, the drag coefficient can be reduced to 0.1 or less, as shown in Table 1 below. Table 1 indicates the drag coefficient (Cd) according to the width and depth of the side grooves (15) formed on the side portion (12).

**[Table 1]**

| Width of hole (mm) | Depth of the side hole (mm) | Cd | Rolling resistance (W) |
|---|---|---|---|
| 0 | 0 | 0.4 | 55 |
| 2 | 2 | 0.2 | 50 |
| 5 | 5 | 0.1 | 47 |
| 7 | 7 | 0.07 | 45 |

### Tire Performance According to Side-Groove Structure and Dimensional Parameters

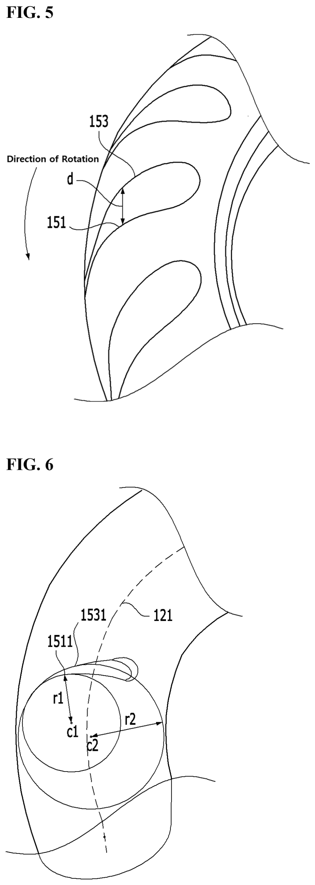

Referring to FIGS. 5 and 6, each side groove (15) may include a first segment (151) forming one inner wall of the side groove and a second segment (153) forming the other inner wall of the side groove. The first segment (151) and the second segment (153) may each be curved, with at least a portion thereof extending with different curvatures. When the tire rotates, air on the circumferential side of the tire flows into the space between the first segment (151) and the second segment (153) and then moves toward the rotational-center side along the side groove. As shown in FIG. 5, when the tire rotates, air first comes into contact with the circumferential side portion of the tire; thus, the first and second segments may be formed such that air flows smoothly toward the rear side of the tire, that is, toward the rotational-center side. When the tire rotates downward, the first segment (151) and the second segment (153) may have a shape convex upward. In other words, when the tire is viewed from one side and rotates counterclockwise, the first segment (151) and the second segment (153) may form a clockwise curve as they extend from the circumferential side (left side of FIG. 5) toward the rotational-center side (right side of FIG. 5).

In addition, as each side groove (15) extends along the side portion from the circumferential-side end (15a) to the rotation-center-side end (15b), a distance (d) between the first segment (151) and the second segment (153) may gradually increase and then decrease.

Referring to FIG. 6, the first segment (151) and the second segment (153) may respectively include a first diverging portion (1511) and a second diverging portion (1531), each extending apart from the other from the end (15a) of the side groove. The first diverging portion (1511) and the second diverging portion (1531) may extend from the end (15a) of the side groove to a portion where the intersection point (15c) or the first point (121) is formed, and at least a portion of each may extend with different curvatures. In this case, a radius of curvature (r1) of a circle (c1) defined by at least a portion of the first diverging portion (1511) may be smaller than a radius of curvature (r2) of a circle (c2) defined by at least a portion of the second diverging portion (1531). Accordingly, as the side groove extends from the end (15a) to the intersection point (15c), the distance (d) between the first segment and the second segment may gradually increase. As the tire thickness (in the depth direction in FIG. 6) increases from the circumferential side (left side of FIG. 6) toward the cross-sectional center (O), this configuration allows air to flow smoothly along the surface of the side groove.

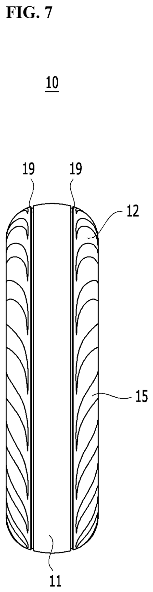

Referring to the embodiment illustrated in FIG. 7, the side portions (12) are disposed on both sides of the ground-contact portion (11), and the side grooves (15) may be formed on the side portions (12) in a radial arrangement with respect to the rotational center. In this case, a plurality of side grooves (15) formed on the side portions (12) on both sides of the ground-contact portion (11) may be recessed symmetrically with respect to the ground-contact portion (11).

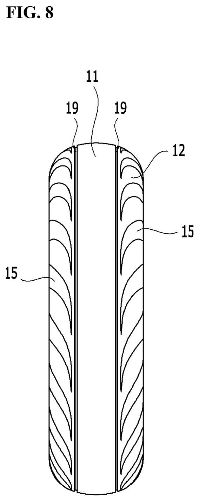

Referring to another embodiment illustrated in FIG. 8, a plurality of side grooves (15) formed on the side portions (12) on both sides of the ground-contact portion (11) may be recessed alternately with respect to the ground-contact portion (11).

Referring again to FIGS. 1 and 7-8, the tire (10) according to one embodiment of the present disclosure may further include a peripheral groove (19). The peripheral groove (19) extends between the ground-contact portion (11) and the side portions (12) and may be recessed along the circumference of the tire between the ground-contact portion (11) and the side portions (12). The peripheral groove (19) substantially distinguishes the ground-contact portion (11) from the side portions (12), and air flowing toward the front of the tire can pass along the peripheral groove (19) and flow in an upward and downward direction of the tire (the 12 o'clock and 6 o'clock directions in FIGS. 7 and 8). With the formation of the peripheral groove (19), air flowing toward the front of the tire can flow not only laterally through the side grooves (15) toward the left and right sides of the tire (the 3 o'clock and 9 o'clock directions in FIGS. 7 and 8) but also vertically along the upper and lower sides of the tire. This configuration further improves airflow over the tire surface, increases the surface area of the tire, and enhances heat dissipation characteristics.

The foregoing description of the present disclosure is provided for illustrative purposes, and those skilled in the art will understand that various modifications can be made without departing from the technical spirit or essential features of the present disclosure. Therefore, the embodiments described above should be understood as illustrative and not restrictive in any respect. For example, components described as being integrated may be implemented separately, and likewise, components described as being separate may be implemented in an integrated form.

The scope of the present disclosure should be defined not by the foregoing detailed description but by the following claims, and all modifications or variations derived from the meaning, scope, and equivalents of the claims should be construed as included within the scope of the present disclosure.

## Claims

1. An airless tire coupled to a rim, comprising:
a ground-contact portion that comes into contact with the ground at least partially when the tire rotates, has a predetermined width, and extends along the circumference of the tire;
a coupling portion configured to be coupled to the rim;
side portions extending from both sides of the ground-contact portion along the surface of the tire to the coupling portion; and
a plurality of side grooves radially arranged with respect to the rotational center of the tire and recessed into the side portions,
wherein the airless tire includes the side grooves formed in the side portions.

2. The airless tire of claim 1, wherein each of the side grooves extends along the side portion from one end formed on a circumferential side of a cross-sectional center of the tire to the other end formed on a rotational-center side of the cross-sectional center.

3. The airless tire of claim 2, wherein each of the side grooves has an insertion depth that gradually increases along the side portion from a circumferential-side end of the side groove toward a cross-sectional center side.

4. The airless tire of claim 3, wherein each of the side grooves has an insertion depth that gradually decreases along the side portion from a point where the side groove intersects a straight line extending parallel to a rotational axis of the tire at a cross-sectional center to an opposite end of the side groove formed on a rotational-center side.

5. The airless tire of claim 3, wherein each of the side grooves has an insertion depth that gradually increases along the side portion from a point where the side groove intersects a straight line extending parallel to a rotational axis of the tire at a cross-sectional center to an opposite end of the side groove formed on a rotational-center side.

6. The airless tire of claim 3, wherein each of the side grooves includes a first segment forming one inner wall of the side groove and a second segment forming the other inner wall of the side groove, and at least a portion of the first segment and the second segment extends with different curvatures.

7. The airless tire of claim 6, wherein, as each of the side grooves extends along the side portion from a circumferential-side end to a rotation-center-side end, a distance between the first segment and the second segment gradually increases and then decreases.

8. The airless tire of claim 2, wherein a maximum insertion depth of each of the side grooves toward a cross-sectional center side is 5 mm or more.

9. The airless tire of claim 2, wherein a length of extension of each of the side grooves is at least one-fourth of a length from a circumferential-side end of the ground-contact portion to an end of the side portion on a coupling-portion side.

10. The airless tire of claim 2, wherein a plurality of side grooves respectively formed on the side portions at both sides of the ground-contact portion are recessed symmetrically with respect to the ground-contact portion.

11. The airless tire of claim 2, wherein a plurality of side grooves respectively formed on the side portions at both sides of the ground-contact portion are recessed alternately with respect to the ground-contact portion.

12. The airless tire of claim 2, wherein the airless tire further comprises a peripheral groove recessed along a circumference of the tire between the ground-contact portion and the side portion.
